(19) Europäisches Patentamt
European Patent Office
Office européen des brevets

(11) **EP 3 842 128 B1**

(12) **EUROPEAN PATENT SPECIFICATION**

(45) Date of publication and mention of the grant of the patent:
**03.05.2023 Bulletin 2023/18**

(21) Application number: **20215831.7**

(22) Date of filing: **18.12.2020**

(51) International Patent Classification (IPC):
**B01D 61/02** (2006.01)     **B01D 69/02** (2006.01)
**B01D 69/06** (2006.01)     **B01D 69/12** (2006.01)
**B01D 71/34** (2006.01)     **B01D 71/56** (2006.01)
**B01D 71/64** (2006.01)     **B01D 71/36** (2006.01)

(52) Cooperative Patent Classification (CPC):
**B01D 61/02; B01D 69/02; B01D 69/06; B01D 69/125; B01D 71/34; B01D 71/36; B01D 71/56; B01D 71/64;** B01D 2325/24; B01D 2325/30

(54) **COMPOSITE SEMIPERMEABLE MEMBRANE**

HALBDURCHLÄSSIGE VERBUNDMEMBRAN

MEMBRANE COMPOSITE SEMI-PERMÉABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2019  JP 2019238353**
**20.08.2020  JP 2020139035**

(43) Date of publication of application:
**30.06.2021  Bulletin 2021/26**

(73) Proprietor: **Nitto Denko Corporation**
**Ibaraki-shi,**
**Osaka 567-8680 (JP)**

(72) Inventors:
• **SATO, Nagahisa**
**Osaka 567-8680 (JP)**
• **ECHIZEN, Masashi**
**Osaka 567-8680 (JP)**

(74) Representative: **Cabinet Beau de Loménie**
**158, rue de l'Université**
**75340 Paris Cedex 07 (FR)**

(56) References cited:
**WO-A1-2019/131304     CN-A- 108 079 806**
**US-A- 5 702 503**

• **LIU FENG ET AL: "A review: the effect of the microporous support during interfacial polymerization on the morphology and performances of a thin film composite membrane for liquid purification", RSC ADVANCES, vol. 9, no. 61, 1 November 2019 (2019-11-01), pages 35417-35428, XP055798005, GB ISSN: 2046-2069, DOI: 10.1039/C9RA07114H**
• **BA C ET AL: "Preparation of PMDA/ODA polyimide membrane for use as substrate in a thermally stable composite reverse osmosis membrane", JOURNAL OF MEMBRANE SCIENCE, ELSEVIER BV, NL, vol. 363, no. 1-2, 1 November 2010 (2010-11-01), pages 140-148, XP027261209, ISSN: 0376-7388 [retrieved on 2010-09-02]**

**Description**

FIELD OF THE INVENTION

The present invention relates to a composite semipermeable membrane.

BACKGROUND OF THE INVENTION

As composite semipermeable membranes used in desalination, membranes having a substrate, a porous support layer composed of an organic polymer, and a separation membrane layer have been widely used. In particular, composite semipermeable membranes used for desalination by reverse osmosis and the like may including a polysulfone porous support layer and a polyamide separation membrane layer (for example, Patent Document 1), are conventionally used.

Meanwhile, materials of the porous layer, which used to remove turbidity before desalination and does not provide a membrane separation function, include polymers such as polysulfone, polyfluorocarbon, polyvinylidene difluoride, polyethylene, polypropylene, polyvinyl alcohol, and polyacrylonitrile (for example, Patent Document 2).

RELATED ART DOCUMENTS

Patent Documents

Patent Document 1: Japanese Unexamined Patent Application Publication (Translation of PCT Application) No. 2014-523340
Patent Document 2: Japanese Unexamined Patent Publication No. Sho58-93734
US patent 5,702, 503 A shows a composite membrane made of an asymmetric porous support and an ultrathin layer having a thickness of less than 100 $\mu$m.
WO 2019/131304 A1 shows a composite hollow fiber membrane provided with a semipermeable membrane layer and a hollow-fiber-like porous support layer, wherein the semipermeable membrane layer contains a crosslinked polyamide polymer formed from a polyfunctional amine compound and a polyfunctional acid halide compound, the support layer has a gradient structure such that the sizes of cells in the support layer gradually increase in a direction from one of an inner surface and an outer surface of the support layer toward the other.
CN 108079806 A discloses a polyamide semipermeable membrane which has a three-dimensional nano-scale Turing structure.
Liu Feng et al. : "A review: the effect of the microporous support during interfacial polymerization on the morphology and performances of a thin film composite membrane for liquid purification", RSC Advances, vol. 9, no. 61, 1 November 2019, pages 35417 - 35428, shows a polyamide formation on a microporous support for providing a composite porous membrane.
C. Ba et al. : "Preparation of PMDA/ODA polyimide membrane for use as substrate in a thermally stable composite reverse osmosis membrane", Journal of Membrane Science, ELSEVIER BV, NL, vol. 363, no. 1-2, 1 November 2010, pages 140-148, shows a composite membrane developed via interfacial polymerization of m-phenylenediamine and trimesoyl chloride on the polyimide membranes to show 98% rejection to 2.0 g/L NaCl solution with a permeation flux of 1.1 $m^3$ $m^{-2}$ $day^{-1}$ at 55.2 bar and room temperature.

SUMMARY OF THE INVENTION

Problem to be solved by the invention

In recent years, from the viewpoint of securing water resources and protecting the environment, the importance of reusing desalinated water or desalinated aqueous solution has been increased. In addition, according to circumstances, further processing to desalinate an oil-containing liquid may be required, for example by using high-pressure conditions, which differ from conventional techniques.

However, it has been found that in the conventional configuration having a polysulfone porous layer as described in Patent Document 1, the processing performance deteriorates over time, and sufficient desalination cannot be achieved. A membrane separation layer having polysulfone as a porous support layer is not suitable for the treatment of an oil-containing liquid. When a composite semipermeable membrane including a porous layer of polysulfone is used to treat an oil-containing liquid, the porous layer formed by polysulfone may deteriorate and form a leak spot, or delaminate between the porous layer and the membrane separation layer. Therefore, it is difficult to maintain processing ability in the continued use of a composite semipermeable membrane with a polysulfone porous layer.

In addition, because the porous layer that does not have the membrane separation function, as described in Patent Document 2, is normally a membrane that is produced for high water permeability at a pressure of less than 0.3 MPa. Generally, such membrane is poor in pressure resistance. Therefore, the use of such membrane is not presumed to be used under high pressure condition.

Accordingly, in view of the foregoing, one aspect of the invention is to provide a novel composite semipermeable membrane capable of stably desalting an oil-containing liquid even under high pressure conditions.

Means for Solving Problems

The composite semipermeable membrane according to the invention is defined in the claims.

Effects of the Invention

According to an aspect of the invention, the invention provides a composite semipermeable membrane that can stably desalt an oil-containing liquid.

BRIEF DESCRIPTION OF THE DRAWINGS

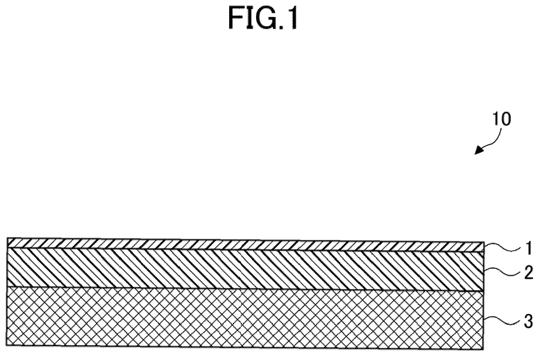

FIG. 1 is a schematic cross-sectional view of a composite semipermeable membrane according to an embodiment of the invention.

DESCRIPTION OF THE PREFERRED EMBODIMENTS

The invention is defined in the claims.

A composite semipermeable membrane 10 according to one embodiment of the present invention includes a porous layer 2 and a membrane separation layer (active layer or skin layer) 1 provided on the porous layer (porous support layer) 2, as illustrated in FIG. 1. As illustrated in FIG. 1, the composite semipermeable membrane 10 includes a substrate 3 for reinforcing the porous layer 2.

In this specification, "semipermeable membrane" refers to a membrane that is permeable to a portion of the components present in a liquid and impermeable to other components of the liquid. Also, "composite" in a composite semipermeable membrane indicates that a plurality of layers having different functions or configurations are laminated.

The membrane separation layer in the composite semipermeable membrane is an extremely thin layer provided at the top of the composite semipermeable membrane. The porous layer then serves to support the membrane separation layer.

The polymer in the porous layer is mainly formed by a crystalline polymer. The "crystalline polymer" also referred to as a semi-crystalline polymer, and the semi-crystalline polymer contains a crystalline portion and an amorphous portion in solid state. The semi-crystalline polymer has a predetermined crystallinity (a ratio of crystalline portion to a total crystalline polymer). In the present specification, a "main component" of a predetermined material or "mainly formed by" a predetermined material indicates that the predetermined material is contained 50% by weight or more of the main component.

In the present embodiment, a composite semipermeable membrane with excellent oil resistance can be obtained because the polymer constituting the porous layer contains the crystalline polymer. Therefore, even if an oil-containing liquid is treated for a long time, the porous layer is not likely to deteriorate and delaminate. Therefore, the performance of the composite semipermeable membrane is not deteriorated due to the influence of oil, and favorable treatment can be continuously conducted.

It is preferable that the polymer in the porous layer is substantially formed by fluoropolymer. In the present specification, the term "substantially formed by" indicates that the inclusion of components other than the predetermined components that are unavoidably generated or mixed in during production is allowed.

The fluoropolymer can be a homopolymer or a copolymer. For example, the fluoropolymer may be a homopolymer or copolymer of polyvinylidene fluoride (PVDF), polytetrafluoroethylene (PTFE), polyvinyl fluoride (PVF), polychlorotrifluoroethylene (PCTFE), and the like. Here, the copolymer is obtained by copolymerizing another monomer unit to a monomer unit of a main component in the fluoropolymer copolymer. The weight of the monomer unit of the main component based on the weight of the fluoropolymer copolymer is 50% by weight or more, preferably 70% by weight or more, and more preferably 80% by weight or more. Therefore, for example, a polyvinylidene fluoride copolymer indicates that a polyvinylidene fluoride copolymer of the vinylidene fluoride monomer unit (the monomer unit derived from vinylidene fluoride) based on the weight of the polyvinylidene fluoride copolymer is 50% by weight or more, preferably 70% by weight or more, further more preferably 80% by weight or more, and most preferably 90% by weight or more.

Among the above-described examples of fluoropolymers, in view of excellent workability, excellent pressure resistance, and chemical resistance (including oil resistance), a polyvinylidene fluoride homopolymer, a polyvinylidene fluoride copolymer, or a mixture of both is preferably used, and a polyvinylidene fluoride copolymer is more preferably used. Thus, the polymer in the porous layer preferably mainly formed by a polyvinylidene fluoride homopolymer and/or a polyvinylidene fluoride copolymer. In addition, the polymer in the porous layer such that a polyvinylidene fluoride homopolymer and/or a polyvinylidene fluoride copolymer based on the total amount of the polymer is preferably 80% by weight or more, more preferably 90% by weight or more, further more preferably 95% by weight or more, even more preferably 99% by weight or more, and most preferably 99.5% by weight or more. Furthermore, it is preferable that the polymer in the porous layer is substantially formed by a polyvinylidene fluoride homopolymer and/or a polyvinylidene fluoride copolymer.

When the fluoropolymer is a copolymer, another monomer unit that is copolymerized with the monomer unit of a main component may be the monomer unit of the fluoropolymer, the monomer unit of the fluoropolymer other than the fluoropolymer, or a monomer component (a fluorine-free monomer component) that is not a fluoropolymer. In the case where the crystalline polymer in the present embodiment is a polyvinylidene fluoride copolymer, another copolymerized monomer unit is preferably a monomer unit derived from hexafluoropropylene, tetrafluoroethylene, and chlorotrifluoroethylene. More preferably, another copolymerized monomer unit contains a monomer unit derived from hexafluoropropylene. That is, when the crystalline polymer contains a vinylidene fluoride copolymer, the vinylidene fluoride copolymer is preferably a vinylidene fluoride-hexafluoropropylene copolymer containing monomer units derived from vinylidene fluoride and monomer units derived from hexafluoropropylene. In addition, when the polyvinylidene fluoride copolymer contains monomer units derived from hexafluoropropylene as another monomer unit, the weight of monomer units derived from hexafluoropropylene based on the weight of the total polyvinylidene fluoride copolymer may be preferably 30% by weight or less, more preferably 20% by weight or less, and even more preferably 10% by weight or less.

The manner of polymerizing the copolymer is not limited. The polymerization may be a graft copolymer, a block copolymer, a random copolymer, or the like. Also, examples of fluoropolymer copolymers include perfluoroalkoxyalkanes (ethylene tetrafluoride-perfluoroalkoxyethylene copolymers, PFA), perfluoroethylene propene copolymers (ethylene tetrafluoride-propylene hexafluoride copolymers, FEP), ethylene tetrafluoroethylene copolymers (ethylene tetrafluoride-ethylene copolymers, ETFE), ethylene chlorotrifluoroethylene copolymers (ethylene trifluoride-ethylene copolymers, ECTFE), and the like.

In addition, regardless of whether the fluoropolymer is a homopolymer or a copolymer, the above-described fluoropolymers may be arbitrarily combined polymer blends (polymer alloys) of two or more species. Polymers of different molecular weights can also be used in combination as the above-described fluoropolymers. For example, a mixture of two or more polyvinylidene fluoride homopolymers having different average molecular weights may be used, two or more polyvinylidene fluoride copolymers having different average molecular weights may be used, or a mixture of a polyvinylidene fluoride homopolymer and a polyvinylidene fluoride copolymer, in which these average molecular weights are different, may be used.

In the present embodiment, the crystallinity of a crystalline polymer is 50% or less, preferably less than 50%, more preferably 48% or less, and even more preferably 45% or less. When the crystallinity of the crystalline polymer is 50% or less, the amorphous portion of the crystalline polymer exceeds 50%, and a toughness of the entire porous layer is increased. By having such structure, a porous layer that is resistant to breakage under pressure can be obtained. In addition, the lower limit of crystallinity of the crystalline polymer is 30% or more, preferably 32% or more. When the crystallinity is 30% or more, sufficient toughness can be secured, therefore, the resulting porous layer is resistant to deformation even when pressure is applied. Therefore, the crystallinity of the crystalline polymer can be adjusted to 30% or more and 50% or less to form a composite semipermeable membrane with high resistance to pressure. The crystallinity can be calculated by measuring a melting heat quantity by differential scanning calorimetry (DSC).

A weight average molecular weight of the crystalline polymer used to form the porous layer is preferably 100,000 or more and 1,000,000 or less, and more preferably 300,000 or more and 1,000,000 or less. When the weight average molecular weight of the polymer is 100,000 or more, a porous layer with a moderate thickness during a manufacturing of a composite semipermeable membrane can be formed, and a moderate strength of the porous layer formed can be ensured. When the weight average molecular weight of the polymer is 1,000,000 or less, a suitable permeability of the porous layer formed can be ensured.

Polymers other than fluoropolymers, which may be included as a polymer component in the porous layer, are polyetherimide (PEI) and polyamideimide (PAI).

The polymer contained in the porous layer is substantially free of polysulfone, thereby improving the oil resistance of the composite semipermeable membrane. Therefore, when a composite semipermeable membrane of the present embodiment is used to desalinate an oil-containing liquid, the desalination can be continued without the occurrence of leaks spots in the porous layer or causing delamination between the porous layer and the membrane separation layer.

In addition, the porous layer may contain components other than the polymer, such as additives and the like.

Additives that may be included in the porous layer as components other than the polymer include functional particles such as colloidal silica, zeolites, and the like.

Furthermore, in the composite semipermeable membrane of the present embodiment, a compression ratio of a portion including the porous layer and the membrane separation layer when subjected to a pressure of 5.5 MPa may be 0.1% or more and is 60% or less, preferably 1.0% or more and 50% or less, and more preferably 1.0% or more and 40% or less.

The compression ratio of the portion including the porous layer and the membrane separation layer is the ratio of the reduced thickness due to compression (i.e., the initial thickness minus the thickness post pressurization) during a predetermined period of time under a predetermined pressure to the initial thickness. The predetermined time may be 2 hours or more. Therefore, for example, the compression ratio of a portion including the porous layer and the membrane separation layer can be the compression ratio when subjected to a pressure of 5.5 MPa for 2 hours. In addition, the compression ratio can be a compression ratio after forming a composite semipermeable membrane including a porous layer and a membrane separation layer, followed by applying liquid to the composite semipermeable membrane at a pressure of 5.5 MPa for 2 hours.

As described above, the portion including the porous layer and the membrane separation layer according to the present embodiment has a compression ratio in the range described above, and exhibits excellent pressure resistance. Accordingly, the composite semipermeable membrane of the present invention can be used under conditions of high operating pressure. For example, in the composite semipermeable membrane of the present embodiment, even when an operating pressure, for example, 1 to 12 MPa is applied to the composite semipermeable membrane by a reverse osmosis method, structural changes of the porous layer can be minimized, and the salt-blocking ratio can be maintained for a long period of time.

A method of producing the porous layer of the present embodiment is a non- solvent-induced phase separation method (NIPS) or a thermally-induced phase separation (TIPS), and a non-solvent-induced phase separation method (NIPS) is preferably used because a uniform and wide porous layer can be produced. More specifically, after the above-described polymer is dissolved in a solvent to obtain a membrane-forming solution, the membrane-forming solution is applied to a substrate such as a non-woven fabric, using a knife coater or the like. The resulting layer is placed under high humidity so as to generate a microphase separation in a portion where the solution is applied, and the polymer in the applied solution is then allowed to solidify and the residual solution is removed from the resulting layer.

In preparing the porous layer by the non-solvent induced phase separation method described above, a crystalline polymer is dissolved in a solvent to form a homogenous membrane-forming solution. Also, the solvent used is preferably a water-soluble solvent and has high boiling point, because a favorable microphase separation can be generated in a portion where the solution is applied. For example, the solvent used is preferably a water-soluble solvent having a boiling point of 130°C or higher and 250°C or lower. Examples of the solvents include dimethylformamide (DMF), dimethylsulfoxide (DMSO), dimethylacetamide (DMAC), 1,3-dimethyl-2-imidazolidinone (DMI), N-methylpyrrolidone (NMP), γ-butyrolactone (GBL), and the like. In other words, the crystalline polymer used in the present embodiment is preferably soluble in the above-mentioned solvents and can be dissolved in the solvents at temperatures from room temperature to about 80°C to obtain a homogenous membrane-forming solution.

At the time of producing the membrane-forming solution, in addition to the above solvents, polyoxyalkylene such as polyethylene glycol, polybutylene glycol, and the like; water-soluble polymers such as polyvinyl alcohol, polyvinyl butyral, and the like; glycerin; diethylene glycol; water; acetone; 1,3-dioxolane; and the like may be added as a porous agent. The porosity, pore diameter, and the like in the porous layer can be adjusted by adding a predetermined amount of the porous agent.

In addition, the porosity of the porous layer before applying pressure in the present embodiment is preferably 30% or more and 70% or less and more preferably 40% or more and 60% or less. When the porosity of the porous layer is 30% or more, the water permeability and desalting ability of the composite semipermeable membrane can be ensured. In addition, when the porosity of the porous layer is 70% or less, the pressure resistance and the strength of the porous layer and the composite semipermeable membrane can be improved, and the permeation performance of the permeable flux can be improved. Furthermore, high permeability can be maintained even when the porous layer is compressed by the application of pressure for long periods of time or at high pressure. When the porosity is 80% or more and the crystallinity is 50% or more, the brittleness under high pressure increases and the composite semipermeable membrane breaks, resulting in a decrease in the desalination retention performance. Note that, the porosity of the porous layer can be measured based on the weight and volume of the porous layer and the polymer density.

Further, the porosity of the porous layer after applying a pressure, for example, after applying a pressure at a pressure of 5.5 MPa for 2 hours, is preferably 30% or more and 60% or less.

The average pore diameter on the surface of the porous layer is 5 nm or more and 50 nm or less, and preferably 15 nm or more and 25 nm or less.

The membrane separation layer is a layer including a crosslinked polyamide. The crosslinked polyamide membrane separation layer is obtained by interfacial polymerization of a multifunctional amine with an acid halide compound.

The polyfunctional amine may be an aromatic polyfunctional amine, an aliphatic polyfunctional amine, or a combination thereof. The aromatic polyfunctional amines may be m-phenylenediamine, p-phenylenediamine, 1,3,5-triaminobenzene, and the like, or N-alkylates thereof, such as N,N-dimethyl m-phenylenediamine, N,N-diethyl m-phenylenediamine, N,N-dimethyl p-phenylenediamine, N,N-diethyl p-phenylenediamine. Alternatively, the aliphatic polyfunctional amine may be piperazine or a derivative thereof. Specific examples of aliphatic polyfunctional amines include piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, 2,5-di-n-butylpiperazine, ethylenediamine, and the like. These polyfunctional amines can be used alone or in combination of two or more.

The acid halide compound is not particularly limited as long as the acid halide compound provides polyamide by a reaction with the above polyfunctional amine. An acid halide having two or more carbonyl halide in one molecule is preferably used.

Specific examples of the acid halide compound include an acid halide compound of a fatty acid such as oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, and the like; an acid halide compound of an aromatic acid such as phthalic acid, isophthalic acid, 1,3,5-benzenetricarboxylic acid, 1,2,4-benzenetricarboxylic acid, 1,3-benzenedicarboxylic acid, 1,4-benzenedicarboxylic acid, and the like. These acid halide compounds can be used alone or in combination of two or more species.

When a membrane separation layer is formed, a porous layer is formed on a substrate, and then a surface of the porous layer is immersed in a solution of a polyfunctional amine compound. After that, the porous layer is contacted with a solution of an acid halide compound to form a crosslinked polyamide layer by processing an interfacial polymerization.

Examples of the substrate in the composite semipermeable membrane include a fibrous planar structure, specifically, a woven fabric, a knitted fabric, a non-woven fabric, and the like. Among these, a non-woven fabric is preferably used. The non-woven fabric may be made by a spunbond process, a spunlace process, a meltblown process, a carding process, an air-lay process, a wet process, a chemical bond process, a thermal bond process, a needle punch process, a water jet process, a stitch bond process, an electrospinning process, and the like. Also, although the type of fibers constituting the non-woven fabric is not limited, the non-woven fabric is preferably synthetic fibers. Specific examples of fibers may be polyethylene terephthalate (PET), polybutylene terephthalate (PBT), polytrimethylene terephthalate (PTT), polyethylene naphthalate (PEN), polypropylene (PP), polyethylene (PE), polyphenylene sulfide (PPS), polyvinylidene fluoride (PVDF), polyglycolic acid (PGA), polylactic acid (PLA), nylon 6, polycaprolactone (PCL), polyethylene adipate (PEA), polyhydroxyalkanoate (PHA), or copolymers thereof. Among these, a polyester such as polyethylene terephthalate, is preferably used because polyethylene terephthalate is inexpensive, has high dimensional stability, is highly moldable, and has high oil resistance.

The thickness of the composite semipermeable membrane of the present embodiment may be 100 $\mu$m or more and 250 $\mu$m or less. The thickness of the porous layer is 10 $\mu$m or more and 100 $\mu$m or less. The thickness of the membrane separation layer may be 0.01 um or more and 1 $\mu$m or less. The thickness of the substrate may be 50 um or more and 200 $\mu$m or less.

The composite semipermeable membrane of the present embodiment is a reverse osmosis membrane. When the composite semipermeable membrane of the present embodiment is used as the reverse osmosis membrane, for example, NaCl blocking ratio can be 99% or more after desalting a solution of 32,000 mg/L of NaCl solution at a pressure of 5.5 MPa for 2 hours at room temperature (25°C).

The composite semipermeable membrane of the present embodiment is preferably used for desalting an oil-containing liquid as described above. Here, "oil-containing" indicates that oil is dissolved in water or an aqueous solution, or indicates that oil is mixed or emulsified by a surfactant and the like. In addition, the oil may be mineral oil, animal or vegetable oil, and the like. The mineral oil may be, for example, gasoline, fuel oil, and the like, and may include hydrocarbon oils, such as paraffinic, olefinic, or aromatic hydrocarbon oils. In particular, in the present embodiment, desalination of aromatic hydrocarbon oil-containing liquid, in which examples of oil include benzene, toluene, ethylbenzene, and xylene, can be efficiently performed. Examples of the above-described animal and vegetable oils include fish oil, whale oil, lard, linseed oil, sesame oil, palm oil, and the like.

In addition, water or an aqueous solution containing 0.02 ppm or more of oil can be processed by using the composite semipermeable membrane of the present embodiment. Also, water or an aqueous solution containing 0.1 ppm or more of oil, 1 ppm or more of oil, 10 ppm or more of oil, and 6,000 ppm or less of oil can be continuously processed. When the concentration of oil-containing liquid is greater than 6,000 pmg/L, a contamination speed of the surface of the composite semipermeable membrane becomes faster, which affects the desalination process.

The composite semipermeable membrane of the present embodiment is preferably configured as a flat membrane. In addition, the flat-formed composite semipermeable membrane of the present embodiment can be preferably used in a spiral-shaped membrane module in which the composite semipermeable membrane is wound around the outside of the water collection tube in a spiral-shaped manner.

The composite semipermeable membrane of the present embodiment can be particularly suitably used for desalination of an oil-containing liquid. For example, the composite semipermeable membrane of the present embodiment can be used for effluents generated in petroleum refineries, petrochemical plants, thermal power plants, automotive manufacturing plants, oil manufacturing plants, food manufacturing plants, and the like; household oil-containing waste liquid; oil-containing seawater; or liquid obtained by pretreating aforementioned wastes.

EXAMPLES

Hereinafter, embodiments of the present invention will be described based on examples.
In Examples, composite semipermeable membranes were produced or prepared, and the composite semipermeable membrane were evaluated by the following methods.

[Evaluation Method]

<Blocking Ratio of Composite Semipermeable Membrane>

To evaluate the salt-blocking ratio of the composite semipermeable membrane, the composite semipermeable membrane was set in a membrane evaluation device (a flow-type flat membrane test cell, manufactured by Nitto Denko Corporation, Membrane Master C70-F), and desalination was conducted by a cross-flow method. An effective penetration area was 32.5 cm$^2$. A supply flow rate was 5 L/min. The evaluation was performed by the following method.
An aqueous NaCl solution of 32,000 mg/L was applied to a composite permeable membrane and desalination was conducted at a pressure of 5.5 MPa for 2 hours. After that, an amount of desalinated water and the amount of NaCl after the desalination were measured. Then, the salt-blocking ratio (%) was calculated based on the NaCl content before and after desalination.

<Compression Ratio of Portion Including Porous Layer and Membrane Separation Layer>

A plurality of samples with a diameter of 75 mm was excised from a composite semipermeable membrane, and the average thickness was determined by measuring the thickness at five points in one sample to obtain an average value (A). In addition, the substrate was peeled off from the composite semipermeable membrane, and the average thickness was determined by measuring the thickness at five points in the peeled substrate to obtain an average value (B). Then, the average value (A) minus the average value (B) was defined as the thickness (C) of the portion including the porous layer and the membrane separation layer before applying a pressure.
Another plurality of samples with a diameter of 75 mm was prepared, and the blocking ratio (%) of the composite semipermeable membrane was calculated under the same condition described above. Then, the average thickness was determined by measuring the thickness at five points of in the sample to obtain an average value (A'). In addition, the substrate was peeled off from the composite semipermeable membrane, and the average thickness was determined by measuring the thickness at five points in the peeled substrate to obtain an average value (B'). Then, the average value (A') minus the average value (B') was defined as the thickness (C') of the portion including the porous layer and the membrane separation layer after applying a pressure. Then, the compression ratio (k) was obtained based on the following equation:

$$\text{Compression ratio (k)\% = 100-(C')/(C)×100}$$

<Porosity of Porous Layer>

When the porous layer was prepared on the substrate, that is, prior to forming the crosslinked polyamide layer (membrane separation layer), samples with a diameter of 75 mm were excised from the porous layer sheet having the porous layer on the substrate and dried at 100°C for 1 hour. Thereafter, the thickness (T) and weight (W) of the porous layer sheet were measured.
In addition, the porous layer was peeled off from the porous layer sheet, and the thickness (T1) and weight (W1) of the substrate were measured. The average thickness of the membrane was determined by measuring the thickness at five points of in a sample using the digital indicator "ID-C112X" manufactured by Mitsutoyo Co., Ltd., and an average weight was determined by measuring three times using the balance "AUW220D" manufactured by Shimadzu Co., Ltd.
The porosity (φ) was calculated based on the following equation.

$$\text{Porosity } \varphi \ (\%) \ = \ (1-(W-W1)/(A\times(T-T1)\times\rho))\times100$$

$$A = 3.75\,cm \times 3.75\,cm \times 3.14 \ (\text{area of 75 mm diameter sample})$$

$$\rho(PVDF) \ = \ 1.78 \ g/cm^3$$

<Crystallinity of Porous Layer >

When the porous layer was prepared on the substrate, that is, prior to forming the crosslinked polyamide layer (membrane separation layer), the substrate was removed from the dried porous layer sheet on the substrate, and approximately 5 mg of the porous layer was sealed to a DSC pan. The crystallinity of the porous layer was measured using a differential scanning calorimeter (DSC-6200) manufactured by Seiko Electronics Co., Ltd. in a temperature range of 50°C to 210°C by increasing the temperature at a rate of 10°C/minute under a nitrogen gas atmosphere to obtain a DSC curve. A baseline of an endothermic value calculation was set from 120°C to the end of melting temperature (about 170°C to 190°C), and the melting calorific value (J/g) was calculated from the area surrounded by the baseline and the endothermic peak. Then, a crystallinity was calculated using the calorific value of a complete crystalline melting of PVDF as 104.7 (J/g).

<Evaluation of Oil Resistance of Composite Semipermeable Membrane>

The oil resistance of the composite semipermeable membrane was evaluated in Examples 2 and Comparative Example 2. The composite semipermeable membrane was immersed in a solution having 85% by weight of xylene and 15% by weight of ethylbenzene as hydrocarbon oil at room temperature for 40 minutes. Thereafter, the blocking ratio in the composite semipermeable membrane was evaluated using the blocking ratio evaluation method described above.

[Example 1]

A homogenous membrane-forming solution was formed by dissolving 19 parts by weight of a polyvinylidene fluoride copolymer (Kynar Flex (Registered trademark) LBG, manufactured by Arkema Corporation) having a weight average molecular weight of 470,000 into 1 part by weight of a polyvinylidene fluoride homopolymer (Kynar (Registered trademark) 761A, manufactured by Arkema Corporation) having a weight average molecular weight of 680,000, 79.48 parts by weight of dimethylacetamide, 0.02 part by weight of polyethylene glycol (polyethylene glycol 35000, manufactured by Merck, Inc.) having a weight average molecular weight of 35,000, and 0.5 part by weight of glycerine at 70°C. The membrane-forming solution was cooled to 40°C and impregnated onto a polyester non-woven fabric with a 0.1 mm thickness, 0.7 g/cm³ using a membrane-forming apparatus equipped with a knife coater. A coater gap of the knife coater was set to 130 um. A microphase separation was generated in a portion where the solution was applied under an atmosphere of 95% relative humidity and a temperature at 30°C, and the resulting layer was allowed to solidify in a solidifying bath at 40°C. Furthermore, the residual solvent was washed off in a washing tank at 70°C to form a porous layer of polyvinylidene fluoride on the non-woven fabric.
Next, the porous layer formed on the non-woven fabric was immersed in a 1.5% by weight of m-phenylenediamine (an aromatic polyfunctional amine compound) aqueous solution for 1 minute so as to be in contact with the porous layer side. The excess m-phenylenediamine aqueous solution was then removed. The porous layer was then immersed for 30 seconds in a naphthene solution containing 0.1% by weight of trimesoyl trichloride (aromatic halide compound) and 0.13% by weight of isophthalic acid dichloride. Thus, a crosslinked polyamide layer (membrane separation layer) was formed on the porous layer, and dried in a dryer at 140°C to obtain a composite semipermeable membrane. The composite semipermeable membrane is configured by arranging the non-woven fabric, the porous layer, and the crosslinked polyamide membrane separation layer in this order. Then, a crystallinity of the porous layer, a porosity before applying a pressure of the porous layer, and a blocking ratio of composite semipermeable membrane, and a compression ratio (k) of a portion including the porous layer and the membrane separation layer were determined by the aforementioned evaluation method. The results are shown in Table 1.

[Example 2]

A polyvinylidene fluoride porous layer was obtained in the same manner as Example 1 except that the membrane-forming solution used included 20 parts by weight of a polyvinylidene fluoride copolymer (Kynar Flex (Registered trademark) LBG, manufactured by Arkema Corporation) having a weight average molecular weight of 470,000, 79.48 parts by weight of dimethylacetamide, 0.02 parts by weight of a polyethylene glycol (polyethylene glycol 20,000, manufactured by Merck, Inc.) having a weight average molecular weight of 20,000, and 0.5 parts by weight of glycerin.

A composite semipermeable membrane was then obtained by forming a crosslinked polyamide layer in the same manner as Example 1. Also, in Example 2, a crystallinity of the porous layer, a porosity before applying a pressure of the porous layer, and a blocking ratio of composite semipermeable membrane, and a compression ratio (k) of a portion including the porous layer and the membrane separation layer were determined by the above-described evaluation method. The results are shown in Table 1. In addition, oil resistance of Example 2 was evaluated. The result is shown in Table 2.

[Example 3]

A polyvinylidene fluoride porous layer was obtained on a non-woven fabric in the same manner as Example 1 except that the membrane-forming solution used included 20 parts by weight of a polyvinylidene fluoride copolymer (Kynar Flex (Registered trademark) 2850, manufactured by Arkema Corporation) having a weight average molecular weight of 470,000, 79.48 parts by weight of dimethylacetamide, 0.02 parts by weight of polyethylene glycol (polyethylene glycol 20000, manufactured by Merck, Inc.) having a weight average molecular weight of 20,000, and 0.5 parts by weight of glycerin.

A composite semipermeable membrane was then obtained by forming a crosslinked polyamide layer in the same manner as Example 1. Also, in Example 3, a crystallinity of the porous layer, a porosity before applying a pressure of the porous layer, and a blocking ratio of composite semipermeable membrane, and a compression ratio (k) of a portion including the porous layer and the membrane separation layer were determined by the above-described evaluation method. The results are shown in Table 1.

[Example 4]

A membrane-forming solution was impregnated onto a polyester non-woven fabric in the same manner as Example 1 except that the membrane-forming solution was formed by mixing 18 parts by weight of polyvinylidene fluoride copolymer (Kynar Flex (Registered trademark) LBG, manufactured by Arkema Corporation) having a weight average molecular weight of 470,000 with 15 parts by weight of polyvinyl pyrrolidone, 66 parts by weight of dimethylacetamide, and 1 part by weight of glycerin. A coater gap of the knife coater was set to 160 um. Next, a microphase separation was generated in a portion where the solution was applied under an atmosphere of 90% relative humidity and a temperature at 40°C, and the resulting layer was allowed to solidify in a solidifying bath at 40°C. Furthermore, the residual solvent was washed off in a washing tank at 70°C to form a porous layer of polyvinylidene fluoride on a non-woven fabric.

Then, a crosslinked polyamide layer was formed by the method of forming the membrane separation layer in the same manner as Example 1 described above to obtain a composite semipermeable membrane. Also, in Example 4, a crystallinity the porous layer, a porosity before applying a pressure of the porous layer, and a blocking ratio of composite semipermeable membrane, and a compression ratio (k) of a portion including the porous layer and the membrane separation layer were determined. The results are shown in Table 1.

[Example 5]

A polyvinylidene fluoride porous layer was obtained on a non-woven fabric in the same manner as Example 1 except that a membrane-forming solution was formed by dissolving 24 parts by weight of a polyvinylidene fluoride homopolymer (Kynar (Registered trademark) HSV900, manufactured by Arkema Corporation) having a weight average molecular weight of 1,000,000 into 63 parts by weight of N-methylpyrrolidone and 13 parts by weight of dientylene glycol at 85°C. Also, Example 5 was performed in the same manner as Example 1 except that a resulting layer was subjected to free running under an atmosphere of 15% relative humidity and a temperature at 42°C, and the resulting layer was allowed to immerse and solidify in a solidifying bath at 20°C. A coater gap of the knife coater was set to 120 $\mu$m.

A composite semipermeable membrane was then obtained by forming a crosslinked polyamide layer as in Example 1. Also, in Example 5, a crystallinity of the porous layer, a porosity before applying a pressure of the porous layer, and a blocking ratio of composite semipermeable membrane, and a compression ratio (k) of a portion including the porous layer and the membrane separation layer were determined. The results are shown in Table 1.

[Comparative Example 1]

A homogenous membrane-forming solution was formed by dissolving 18 parts by weight of polyvinylidene fluoride (Solef (Registered trademark) 6012, manufactured by Solvay, Inc.) having an average molecular weight of 380,000 into 15 parts by weight of polyvinylpyrrolidone, 66.5 parts by weight of dimethylacetamide, and 0.5 parts by weight of glycerin at 70°C. The membrane-forming solution was cooled to 40°C and impregnated onto a polyester non-woven fabric with a 0.1 mm thickness, 0.7 g/cm³ density using a membrane-forming apparatus equipped with a knife coater. A coater gap of the knife coater was set to 180 um. A microphase separation was generated in a portion where the solution was applied under an atmosphere of 95% relative humidity and a temperature at 30°C, and the resulting layer was allowed to solidify in a solidifying bath at 45°C. Furthermore, the residual solvent was washed off in a washing tank at 50°C to form a porous layer of polyvinylidene fluoride on the non-woven fabric.

A crosslinked polyamide layer was then formed in the same manner as Example 1 to obtain a composite semipermeable membrane. Also, in Comparative Example 2, a crystallinity of the porous layer, a porosity before applying a pressure of the porous layer, a blocking ratio of composite semipermeable membrane, and a compression ratio (k) of a portion including the porous layer and the membrane separation layer were determined by the above-described evaluation method. The results are shown in Table 1.

[Comparative Example 2]

A reverse osmosis membrane of a spiral RO membrane element (LG SW 400 R, manufactured by LG chemical) was prepared. The reverse osmosis membrane is a composite semipermeable membrane in which the porous layer is a polysulfone membrane. In Comparative Example 2, oil resistance was evaluated. The results are shown in Table 2.

[Table 1]

|  | Example 1 | Example 2 | Example 3 | Example 4 | Example 5 | Comparative Example 1 |
|---|---|---|---|---|---|---|
| Calorific value [J/g] | 39.5 | 35.0 | 40.7 | 44.3 | 35.1 | 54.5 |
| Crystallinity [%] | 37.7 | 33.4 | 38.9 | 42.3 | 33.5 | 52.1 |
| Pressure applied [MPa] | 5.5 | 5.5 | 5.5 | 5.5 | 5.5 | 5.5 |
| Blocking ratio [%] | 99.6 | 99.3 | 99.6 | 99.1 | 99.4 | 64.4 |
| Porosity [%] | 47.2 | 43.9 | 49.9 | 64.8 | 35.1 | 84.4 |
| Compression ratio [k] of portion including porous layer and membrane separation | 27.9 | 15.2 | 30.2 | 40.0 | 1.4 | 74.6 |

As shown in Table 1, Examples 1 to 5 in which the compression ratio (k) of the portion including the porous layer and the membrane separation layer in composite semipermeable membrane was 60% or less exhibited a high NaCl blocking ratio of 99% or more. Furthermore, from Table 1, it was found that the NaCl blocking ratio in Comparative Example 1 in which the compression ratio (k) of the portion including the porous layer and the membrane separation layer exceeded 60% was inferior to Examples 1 to 5.

[Table 2]

|  | Example 2 | Comparative Example 2 |
|---|---|---|
| Blocking ratio [%] before immersing in xylene-containing liquid | 99.30 | 99.4 |
| Blocking ratio [%] after immersing in xylene-containing liquid | 97.65 | could not be assessed |

From Table 2, it was found that the NaCl blocking ratio of Example 2 was high even after immersion in the xylene-containing liquid. In contrast, in Comparative Example 2, the blocking ratio could not be assessed because the porous layer was dissolved and delamination between the porous layer and the membrane separation layer was generated after immersion in the xylene-containing liquid for 40 minutes at room temperature.

DESCRIPTION OF THE REFERENCE NUMERALS

1    Membrane separation layer

2     Porous layer
3     Substrate
10    Composite semipermeable membrane

## Claims

**1.** A composite semipermeable membrane (10) which is a reverse osmosis membrane and comprises:

a substrate (3);
a porous layer (2) provided on the substrate;
a membrane separation layer (1) consisting of a crosslinked polyamide and provided on the porous layer (2) ; and
a crystalline polymer contained in the porous layer (2) and having a crystallinity of 30% or more and 50% or less as measured according to the description,
wherein the porous layer (2) consists of a fluoropolymer or consists of a polymer selected from polyetherimide and polyamideimide and has an average pore diameter from 5 nm to 50 nm on the surface and extends from said surface with a thickness of 10 $\mu$m to 100 $\mu$m and is a layer formed by a non-solvent-induced phase separation method or a thermally-induced phase separation method with forming the porous layer (2) on a substrate (3), and the membrane separation layer (1) is a layer formed by immersion of a polyfunctional amine compound and thereafter contacting the porous layer (2) with a solution of an acid halide compound to perform interfacial polymerization, and
wherein a compression ratio of a portion including the porous layer (2) and the membrane separation layer (1) when subjected to a pressure of 5.5 MPa is 60% or less as measured according to the description.

**2.** The composite semipermeable membrane (10) according to claim 1, wherein the crystalline polymer is a fluoropolymer.

**3.** The composite semipermeable membrane (10) according to claim 2, wherein the fluoropolymer is one or more selected from polyvinylidene fluoride (PVDF), polytetrafluoroethylene (PTFE), ethylene tetrafluoroethylene (ETFE), and perfluoroalkoxyfluorocarbon polymer (PFA).

**4.** The composite semipermeable membrane (10) according to any one of claims 1 to 3, wherein a porosity of the porous layer (2) is 30% or more and 70% or less.

## Patentansprüche

**1.** Semipermeable Verbundmembran (10), die eine Umkehrosmose-Membran ist und umfasst:

ein Substrat (3),
eine poröse Schicht (2), die auf dem Substrat vorgesehen ist,
eine Membran-Trennschicht (L), die aus einem vernetzten Polyamid besteht und auf der porösen Schicht (2) vorgesehen ist, und
ein kristallines Polymer, das in der porösen Schicht (2) enthalten ist und eine Kristallinität von 30 % oder mehr und 50 % oder weniger aufweist, gemessen in Übereinstimmung mit der Beschreibung,
wobei die poröse Schicht (2) aus einem Fluorpolymer besteht oder aus einem Polymer ausgewählt aus Polyetherimid und Polyamidimid besteht und einen mittleren Porendurchmesser von 5 nm bis 50 nm an der Oberfläche aufweist und sich von der Oberfläche mit einer Dicke von 10 $\mu$m bis 100 $\mu$m erstreckt, und eine Schicht ist, die durch ein nicht durch Lösungsmittel induziertes Phasentrennverfahren oder ein thermisch induziertes Phasentrennverfahren mit Bildung der porösen Schicht (2) auf einem Substrat (3) gebildet wird, und die Membran-Trennschicht (1) eine Schicht ist, die durch Immersion einer polyfunktionellen Amin-Verbindung und anschließendes Inkontaktbringen der porösen Schicht (2) mit einer Lösung einer Säurehalogenid-Verbindung zum Durchführen der Grenzflächen-Polymerisation gebildet wird, und
wobei ein Kompressionsverhältnis eines Abschnittes, der die poröse Schicht (2) und die Membran-Trennschicht (1) beinhaltet, wenn er einem Druck von 5,5 MPa ausgesetzt wird, 60 % oder weniger beträgt, gemessen in Übereinstimmung mit der Beschreibung.

**2.** Semipermeable Verbundmembran (10) nach Anspruch 1, wobei das kristalline Polymer ein Fluorpolymer ist.

3. Semipermeable Verbundmembran (10) nach Anspruch 2, wobei das Fluorpolymer eines oder mehrere ausgewählt aus Polyvinylidenfluorid (PVDF), Polytetrafluorethylen (PTFE), Ethylen-Tetrafluorethylen (ETFE) und Perfluoralkoxy-Fluorcarbon-Polymer (PFA) ist.

4. Semipermeable Verbundmembran (10) nach einem der Ansprüche 1 bis 3, wobei eine Porosität der porösen Schicht (2) 30 % oder mehr und 70 % oder weniger beträgt.

**Revendications**

1. Membrane semiperméable composite (10) qui est une membrane d'osmose inverse et comprend :

   un substrat (3) ;
   une couche poreuse (2) fournie sur le substrat ;
   une couche de séparation de membrane (1) consistant en un polyamide réticulé et fournie sur la couche poreuse (2) ; et
   un polymère cristallin contenu dans la couche poreuse (2) et ayant une cristallinité de 30 % ou plus et 50 % ou moins comme mesurée selon la description,
   dans laquelle la couche poreuse (2) consiste en un fluoropolymère ou consiste en un polymère choisi parmi du polyétherimide et polyamideimide et présente un diamètre moyen de pore de 5 nm à 50 nm sur la surface et s'étend à partir de ladite surface avec une épaisseur de 10 $\mu$m à 100 $\mu$m et est une couche formée par un procédé de séparation de phase non induite par solvant ou un procédé de séparation de phase thermiquement induite avec formation de la couche poreuse (2) sur un substrat (3), et la couche de séparation de membrane (1) est une couche formée par immersion d'un composé d'amine polyfonctionnelle et mise en contact subséquente de la couche poreuse (2) avec une solution d'un composé d'halogénure d'acide pour réaliser une polymérisation interfaciale, et
   dans laquelle un taux de compression d'une portion incluant la couche poreuse (2) et la couche de séparation de membrane (1) lorsque soumise à une pression de 5,5 MPa est de 60 % ou moins comme mesuré selon la description.

2. Membrane semiperméable composite (10) selon la revendication 1, dans laquelle le polymère cristallin est un fluoropolymère.

3. Membrane semiperméable composite (10) selon la revendication 2, dans laquelle le fluoropolymère est un ou plusieurs choisis parmi un polymère de poly(fluorure de vinylidène) (PVDF), polytétrafluoroéthylène (PTFE), éthylène tétrafluoroéthylène (ETFE), et perfluoroalcoxyfluorocarbone (PFA).

4. Membrane semiperméable composite (10) selon l'une quelconque des revendications 1 à 3, dans laquelle une porosité de la couche poreuse (2) est de 30 % ou plus et 70 % ou moins.

# FIG.1

10

1

2

3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014523340 W
- JP 58093734 A
- US 5702503 A
- WO 2019131304 A1
- CN 108079806 A

### Non-patent literature cited in the description

- **LIU FENG et al.** A review: the effect of the microporous support during interfacial polymerization on the morphology and performances of a thin film composite membrane for liquid purification. *RSC Advances,* 01 November 2019, vol. 9 (61), 35417-35428
- Preparation of PMDA/ODA polyimide membrane for use as substrate in a thermally stable composite reverse osmosis membrane. **C. BA et al.** Journal of Membrane Science. ELSEVIER BV, 01 November 2010, vol. 363, 140-148